(19) Europäisches Patentamt
European Patent Office
Office européen des brevets

(11) EP 0 698 627 B1

(12) FASCICULE DE BREVET EUROPEEN

(45) Date de publication et mention de la délivrance du brevet:
**04.03.1998 Bulletin 1998/10**

(51) Int. Cl.[6]: **C08G 12/26**

(21) Numéro de dépôt: **95401780.2**

(22) Date de dépôt: **27.07.1995**

# (54) Résines aminoplastes et leur application comme réticulant de la cellulose

Aminoplastharze und ihre Verwendung als Vernetzungsmittel für Cellulose

Aminoplast resins and their use as a crosslinker of cellulose

(84) Etats contractants désignés:
**CH DE ES FR GB IT LI**

(30) Priorité: **22.08.1994 FR 9410186**

(43) Date de publication de la demande:
**28.02.1996 Bulletin 1996/09**

(73) Titulaire:
**SOCIETE FRANCAISE HOECHST**
**Société anonyme dite:**
**F-92800 Puteaux (FR)**

(72) Inventeurs:
- **Wilhelm, Didier**
  **F-92130 Issy les Moulineaux (FR)**
- **Blanc, Alain**
  **F-93200 Saint-Denis (FR)**
- **Floyd, William C.**
  **Chester, South Carolina 29706 (US)**

(74) Mandataire: **Rinuy, Santarelli**
**14, avenue de la Grande Armée,**
**B.P. 237**
**75822 Paris Cédex 17 (FR)**

(56) Documents cités:
**EP-A- 0 381 905**
**WO-A-93/14261**
**US-A- 4 455 416**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 698 627 B1

Printed by Xerox (UK) Business Services
2.15.12/3.4

## Description

La présente invention concerne de nouvelles résines aminoplastes et leur application comme réticulant de la cellulose.

On connaît de très nombreuses résines aminoplastes dans lesquelles le dérivé aminé est l'urée ou la mélamine, et le dérivé aldéhydique est le formaldéhyde ou le glyoxal. (cf. notamment à Encyclopedia of Polymer Science and Engineering, 2ème édition, volume 1, pages 752-789, John Wiley and Sons, New-York, 1985). Ces résines présentent de très nombreuses applications et elles peuvent notamment être utilisées pour ennoblir les fibres cellulosiques en leur conférant des propriétés de "wash and wear"(lavez et portez). Dans les domaines textile ou papetier, l'homme du métier recherche en permanence des résines aminoplastes réactives autorisant une bonne réticulation des fibres cellulosiques et présentant également, dans le cas des tissus à base de fibres cellulosiques, une excellente rémanence aux lavages ménagers. En tentant de résoudre ce problème, la demanderesse a découvert avec étonnement de nouvelles résines aminoplastes contenant des groupements aldéhydiques bloqués transitoirement à l'état d'acétal.

EP-A-0 381 905 divulgue des résines aminoplastes à base de dérivés azotés (l'urée, la diméthyl-1,3-urée, l'éthylène urée, la dihydoxy-4,5-éthylène urée) et d'un mélange du glyoxal et d'un monoacétal du glyoxal.

La présente invention a donc pour objet des résines aminoplastes à base d'un ou plusieurs dérivés aminés et d'un ou plusieurs aldéhydes caractérisées par le fait que le dérivé aminé est la mélamine, le glycolurile ou leur mélange en proportions variables et que l'aldéhyde est un produit de formule (I)

$$R\text{-}CHO \qquad (I)$$

que l'on désignera "monoacétal du glyoxal", dans laquelle R représente un groupement dialcoxyméthyle, dioxolan-1,3 yl-2 éventuellement substitué sur les sommets 4 et/ou 5 par un ou plusieurs groupements alcoyle ou un groupement dioxan-1,3 yl-2 éventuellement substitué sur les sommets 4, 5 et/ou 6 par un ou plusieurs groupements alcoyle, en mélange éventuellement avec du glyoxal.

Le terme alcoxyle peut désigner par exemple, un radical méthoxyle, éthoxyle, n-propoxyle, 1-méthoxy éthoxyle, n-butoxyle, 2-méthoxy propoxyle.

Le terme alcoyle peut désigner par exemple un radical méthyle, éthyle, n-propyle, 1-méthyl éthyle, n-butyle, 2-méthyl propyle.

L'invention a plus particulièrement pour objet les résines aminoplastes telles que définies ci-dessus, caractérisées en ce que le produit de formule (I) est le diméthoxyacétaldéhyde, le diéthoxyacétaldéhyde, le dibutoxyacétaldéhyde, le formyl-2 dioxolane-1,3 ou le diméthyl-5,5 formyl-2 dioxane-1,3 en mélange éventuellement avec du glyoxal.

Parmi ces dernières résines, l'invention a notamment pour objet les résines caractérisées par le fait que le dérivé aminé est soit la mélamine, soit le glycolurile, et que l'aldéhyde est le diméthoxyacétaldéhyde, le diéthoxyacétaldéhyde, le dibutoxyacétaldéhyde en mélange éventuellement avec du glyoxal.

Parmi ces résines, on peut citer plus particulièrement celles à base de mélamine et de diméthoxyacétaldéhyde ou de dibutoxyacétaldéhyde, de formule (II)

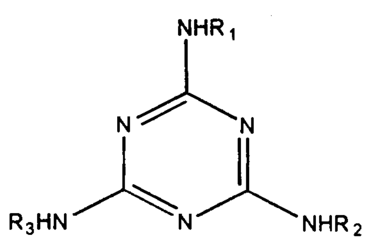

(II)

dans laquelle $R_1$ représente un radical de formule (III)

$$-CH(OH)-CH(OR')_2 \qquad (III)$$

où R' représente un radical méthyle ou butyle, $R_2$ et $R_3$ identiques ou différents représentent un atome d'hydrogène ou un radical $R_1$.

Parmi ces derniers produits, l'invention a notamment pour objet:

- la (diméthoxy-2',2' hydroxy-1' éthylamino)-2 diamino-4,6 s-triazine,
- la (dibutoxy-2',2' hydroxy-1' éthylamino)-2 diamino-4,6 s-triazine,

- la bis(diméthoxy-2',2' hydroxy-1' éthylamino)-2,4 amino-6 s-triazine,
- la bis(dibutoxy-2',2' hydroxy-1' éthylamino)-2,4 amino-6 s-triazine,
- la tris(diméthoxy-2',2' hydroxy-1' éthylamino)-2,4,6 s-triazine,
- la tris(dibutoxy-2',2' hydroxy-1' éthylamino)-2,4,6 s-triazine,

Selon l'invention, les résines de l'invention peuvent être préparées par un procédé caractérisé en ce que l'on fait réagir, en milieu aqueux, à un pH supérieur à 6, la quantité molaire d'un aldéhyde de formule (I) en mélange éventuellement avec du glyoxal, avec soit de la mélamine, soit du glycolurile, soit un mélange de glycolurile et de mélamine pour obtenir le degré de substitution désiré, puis que l'on isole la résine obtenue par des procédés connus en soi.

Dans des conditions préférentielles de mise en oeuvre de l'invention, le procédé ci-dessus décrit est réalisé de la manière suivante:

- à une température comprise entre 30 et 120°C,
- en milieu aqueux en présence éventuellement d'un tiers solvant miscible à l'eau tel qu'un alcanol inerte vis-à-vis des produits mis en réaction,
- en présence éventuellement d'un catalyseur tel qu'un agent alcalin (hydroxyde de sodium, hydroxyde de potassium par exemple).
- en utilisant l'aldéhyde de formule (I) en solution brute réactionnelle telle qu'obtenue par le procédé décrit dans FR-A-2.599.362.

Dans le cas où le dérivé aminé est la mélamine, on peut utiliser jusqu'à 6 moles d'aldéhyde de formule (I) par mole de mélamine mise en oeuvre pour obtenir le degré de substitution désiré des groupement amino. Dans le cas où le dérivé aminé est le glycolurile, on peut utiliser jusqu'à 4 moles d'aldéhyde de formule (I) de manière à obtenir une substitution complète des groupements amino. Dans le cas où le dérivé aminé est un mélange de mélamine et de glycolurile, on utilisera la quantité molaire d'aldéhyde de formule (I) pour obtenir, sur les dérivés aminés, le nombre désiré de groupements N-CH(OH)-R où R a la signification donnée précédemment. Pour obtenir les résines de l'invention, il suffit en fin de réaction, d'éliminer le ou les solvants réactionnels pour obtenir la résine désirée avec un excellent rendement, mais en règle générale, on préfère utiliser directement le brut réactionnel ou le brut réactionnel concentré sous pression réduite jusqu'à l'obtention d'un extrait sec désiré, déterminé par séchage d'un échantillon durant 3 heures à 105°C.

Selon une variante de l'invention, les résines décrites ci-dessus peuvent être vieillies de façon naturelle ou accélérée. Le vieillissement des résines décrites ci-dessus permet d'obtenir des résines aminoplastes plus réactives, ce qui peut présenter un intérêt pour certaines applications.

La présente invention a donc également pour objet des résines aminoplastes à base de mélamine et/ou de glycolurile et d'un monoacétal du glyoxal et éventuellement de glyoxal, qui auront été vieillies de façon spontanée ou accélérée.

Pour vieillir spontanément des résines telles que décrites ci-dessus, on les entrepose dans une pièce à température ambiante, dans un récipient fermé, ce qui a pour conséquence une augmentation de la viscosité de ces résines.

L'augmentation de viscosité est fonction de la durée et des conditions (pH, température, concentration) du vieillissement.

Si l'on prend l'exemple d'une résine mélamine/diméthoxyéthanal 1/3 ayant une concentration en matière active de 54%, et une viscosité d'environ 50 mPa.s, un stockage d'un an à 25°C, dans un flacon scellé, permet d'obtenir une résine vieillie ayant une viscosité comprise entre 200 et 300 mPa.s.

De façon à permettre une utilisation plus rapide de ces résines, on peut opérer un vieillissement accéléré des résines aminoplastes décrites ci-dessus.

Pour cela, on fait subir à la résine en solution aqueuse le traitement suivant:

- ajustement du pH à une valeur acide ou neutre,
- chauffage de la solution.

Par exemple, si l'on souhaite réaliser le vieillissement dans un temps inférieur à une dizaine d'heures tout en conservant un contrôle de l'évolution de la réaction, on ajuste le pH à une valeur comprise entre 3 et 8, préférentiellement entre 5,0 et 7,5. On travaillera à une température supérieure à 80°C, pendant 1 à 10 H.

De telles conditions réactionnelles permettent de suivre l'évolution de la viscosité. Par de simples essais, l'homme du métier pourra choisir les conditions qui conviennent le mieux à la résine de départ.

L'analyse par RMN du proton de ces résines permet d'observer que les déplacements chimiques des protons sont les mêmes dans les résines vieillies et dans les résines de départ. Toutefois, on remarque dans les spectres des résines vieillies un élargissement des pics qui permet d'affirmer qu'il s'est formé des oligomères des produits de départ au cours du procédé de vieillissement, ce que confirme l'augmentation de la viscosité.

Enfin, on pourra préparer ces résines vieillies en une seule étape à partir de la mélamine et/ou de glycolurile et de monoacétal de glyoxal, et éventuellement de glyoxal, par un procédé caractérisé en ce qu'au mélange d'amine et d'aldéhyde en solution aqueuse, on ajoute éventuellement une solution d'acide pour ajuster le pH à une valeur comprise entre 3 et 8, préférentiellement entre 5,0 et 7,5 et l'on porte le mélange à une température supérieure à 30°C. Préférentiellement, on travaillera à une température supérieure à 80°C, pendant 1 à 10 H.

De la même manière que dans la méthode décrite ci-dessus, l'homme du métier ajustera les paramètres en fonction de son produit de départ et du taux de vieillissement qu'il souhaite obtenir.

Selon une autre variante de l'invention, les résines aminoplastes décrites ci-dessus peuvent être partiellement ou totalement éthérifiées par des alcools, en particulier par du méthanol. Plus particulièrement, on pourra citer les résines à base de mélamine et de monoacétals du glyoxal éthérifiées par le méthanol, de formule (IV)

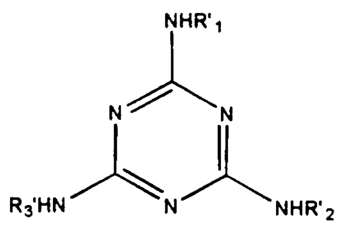

(IV)

dans laquelle $R'_1$, $R'_2$, $R'_3$ identiques ou différents représentent

- soit un atome d'hydrogène,
- soit un radical de formule (V)

$$-CH(OH)-R \qquad (V)$$

  où R a la même signification que dans la formule (I)
- soit un radical de formule (VI)

$$-CH(OR'')-R \qquad (VI)$$

R ayant la même signification que dans la formule (I), et R" désignant un radical alcoyle en $C_1$-$C_4$, de préférence un radical méthyle, l'un au moins de $R'_1$, $R'_2$, $R'_3$ étant différent de l'atome d'hydrogène.

Ces résines peuvent être obtenues par un procédé consistant à traiter les résines aminoplastes de départ par un alcool en milieu acide ou neutre.

De façon préférentielle, la solution aqueuse de résine aminoplaste sera concentrée, afin de favoriser la réaction d'éthérification.

On pourra par exemple traiter la résine aminoplaste de départ, à base de mélamine, par du méthanol dans un milieu ajusté à un pH compris entre 2 et 7, de préférence entre 4 et 5, en portant le milieu à une température comprise entre 40 et 65°C.

Les produits de formule (I) sont soit des produits commerciaux, soit des produits accessibles par des procédés connus tels que le procédé décrit dans FR-A-2.599.362.

Les résines de l'invention, exemptes de formaldéhyde libre ou combiné, présentent d'intéressantes propriétés pour la réticulation de la cellulose. Ces propriétés justifient leur application comme réticulant de la cellulose, et elles sont d'autant plus intéressantes qu'elles autorisent la réticulation de la cellulose en l'absence de formaldéhyde libre ou combiné.

La présente invention a enfin pour objet une méthode de réticulation de la cellulose caractérisée en ce que l'on fait réagir une fibre cellulosique, notamment un tissu à base de fibres cellulosiques, avec une quantité suffisante d'une résine aminoplaste telle que définie ci-dessus.

**EXEMPLE 1**

On mélange sous agitation, à la température ambiante:

- 163,8 g (1,3 mole) de mélamine,

- 734,2 g (3,9 moles) de dibutoxyéthanal,
- 897 g d'un mélange eau-propanol-2, 1/1 en volume,
- une quantité suffisante de soude à 30% en poids pour obtenir un pH d'environ 9.

Ce mélange est chauffé 4 heures à l'ébullition, sous agitation en maintenant le pH à environ 9 par addition si nécessaire de quelques gouttes de soude à 30% en poids. En fin de réaction, on obtient une solution que l'on concentre sous pression réduite. On obtient ainsi 850 g d'une huile visqueuse qui se prend lentement en masse. Un échantillon de 0,709 g de cette huile est purifié par chromatographie sur silice avec élution avec un mélange dichlorométhaneméthanol, 9/1 en volume. On sépare ainsi, avec un rendement de 91%, 5 fractions désignées A1-A5 qui sont ensuite analysées par RMN du proton et du carbone 13 en solution dans le DMSO $d_6$. Les déplacements chimique (dppm) des atomes de carbone des produits de mono-, di- et tricondensation (CI-CIII) sont donnés dans le tableau I ainsi que la composition en proportions pondérales des diverses fractions A1-A5 (tableau II).

## TABLEAU I

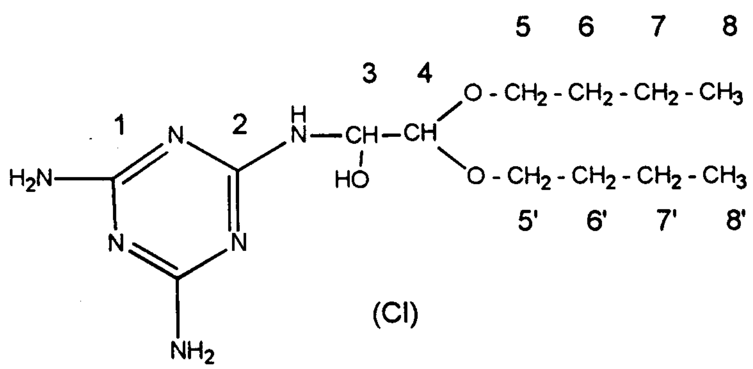

(CI)

| | $C_1$ | $C_2$ | $C_3$ | $C_4$ | $C_{5,5'}$ | $C_{6,6'}$ | $C_{7,7'}$ | $C_{8,8'}$ |
|---|---|---|---|---|---|---|---|---|
| Mélamine | 167,5 | | | | | | | |
| CI | 167,5 | 167,2 | 74,1 | 102,6 | 66,5<br>66,2 | 31,5 | 18,8 | 13,6 |

Pour le produit de dicondensation (CII), les déplacements chimiques des atomes de carbone du cycle sont respectivement de 167 ppm ($C-NH_2$) et de 166 ppm pour les deux autres atomes de carbone. Pour le produit de tricondensation (CIII), les déplacements chimiques des atomes de carbone du cycle sont de 165,3 ppm. Aussi bien pour CII que pour CIII, les déplacements chimiques des atomes de carbone des chaînes ($C_3$-$C_8$ et $C_{5-8}$) sont identiques à ceux de CI.

TABLEAU II

| Fractions | Poids (g) | Mel. | DBE | $C_I$ | $C_{II}$ | $C_{III}$ |
|---|---|---|---|---|---|---|
| A1 | 0,210 | | t | | | »100 |
| A2 | 0,236 | | t | | 25 | 75 |
| A3 | 0,078 | | t | | 72 | 28 |
| A4 | 0,083 | 8 | | 28 | 44 | 20 |
| A5 | 0,037 | | | 60 | 40 | |

Mel. : mélamine
DBE : dibutoxyéthanal
t : non dosé
$C_I$ : (dibutoxy-2',2' hydroxy-1' éthylamino)-2 diamino-4,6 s-triazine
$C_{II}$ : bis(dibutoxy-2',2' hydroxy-1' éthylamino)-2,4 amino-6 s-triazine
$C_{III}$ : la tris(dibutoxy-2',2' hydroxy-1' éthylamino)-2,4,6 s-triazine

**EXEMPLE 2**

On mélange sous agitation, à la température ambiante :

- 12,6 g (0,1 mole) de mélamine,
- 31,2 g (0,3 mole) de diméthoxyéthanal en solution dans 31,2 g d'eau,
- une quantité suffisante de soude à 30% en poids pour obtenir un pH d'environ 9.

Ce mélange est ensuite chauffé sous agitation, 2 heures à 60°C en maintenant le pH à environ 9 en ajoutant, si nécessaire, quelques gouttes de soude à 30% en poids.

La solution réactionnelle est ensuite concentrée sous pression réduite. On obtient ainsi environ 43,8 g d'une huile désignée H2 contenant des traces de mélamine et des produits de mono-, di- et tricondensation dont les déplacements chimiques (dppm) des atomes de carbone (RMN du carbone 13 en solution dans le DMSO $d_6$) sont donnés dans le tableau III.

## TABLEAU III

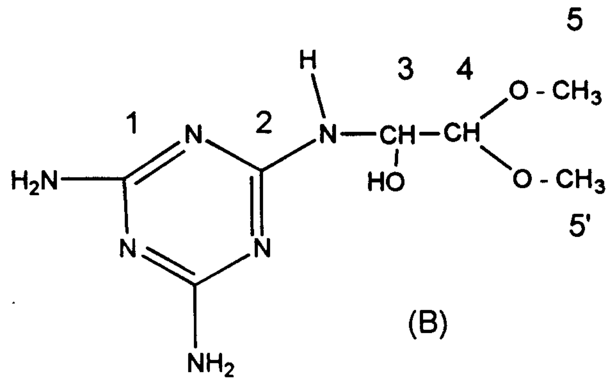

(B)

| | $C_1$ | $C_2$ | $C_3$ | $C_4$ | $C_{5,5'}$ |
|---|---|---|---|---|---|
| Mélamine | 167,5 | | | | |
| B | 167,4 | 167,1 | 73,6 | 104,7 | 54,7<br>54,0 |
| $B_2$ | 167 | 166 | 73,6 | 104,7 | 54,7<br>54,0 |
| $B_3$ | – | 165,2 | 73,6 | 104,4 | 54,7<br>54,0 |

$B_2$ : bis(diméthoxy-2',2' hydroxy-1' éthylamino)-2,4 amino-6 s-triazine,

$B_3$ : tris(diméthoxy-2',2' hydroxy-1' éthylamino)-2,4,6 s-triazine,

Pour le produit $B_2$, l'atome de carbone noté $C_1$ est l'atome de carbone porteur du groupement amino.

**EXEMPLE 3**

On mélange sous agitation, à la température ambiante :

- 252 g (2 moles) de mélamine,
- 58 g (1 mole) de glyoxal en solution aqueuse à 40% en poids,
- 416 g (4 moles) de diméthoxyacétaldéhyde en solution dans 416 g d'eau,
- une quantité suffisante de soude à 30% en poids pour obtenir un pH d'environ 7.

Ce mélange est chauffé sous agitation durant 2 heures à 60°C en maintenant le pH à environ 7 par addition si nécessaire, quelques gouttes de soude à 30% en poids.

On obtient ainsi environ 1 230 g d'une solution aqueuse contenant environ 727 g d'une résine aminoplaste selon l'invention.

L'analyse par RMN du carbone 13 d'un échantillon de cette résine montre que, d'une part, les molécules de mélamine sont substituées par des groupements : -NH-CH(OH)-CH(OMe)$_2$, et d'autre part, que probablement deux molécules de mélamine sont liées par un pont : -NH-CH(OH)-CH(OH)-NH-.

**EXEMPLE 4**

On chauffe deux heures à 60°C, sous agitation et en maintenant le pH du milieu réactionnel à 9 par addition de soude 5N le mélange suivant :

- 546 g (5,25 moles) de diméthoxyéthanal en solution dans 364 g d'eau distillée,
- 248,5 (1,75 mole) de glycolurile,
- 290 g d'eau distillée.

On observe la dissolution du glycolurile après 90 minutes de chauffage. Après refroidissement à la température ambiante de la solution réactionnelle, on obtient 1472 g d'une solution aqueuse contenant environ 54% de résine selon l'invention. L'analyse par RMN $^{13}C$ d'un échantillon de cette résine dans le DMSO $d_6$ est en accord avec la structure attendue :
162-157 ppm (C=O);

103-104 ppm (CH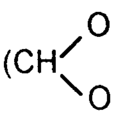 ) ;

75 ppm (CHOH); 65-62 ppm (C-H); 56-54 ppm ($OCH_3$).

**EXEMPLES 5 à 8**

La résine aminoplaste préparée à l'exemple 2 est diluée à 54 % de matière active par addition de 6 g d'eau. On obtient une résine ayant une viscosité d'environ 50 mPa.s.

Le pH de cette solution est ajusté à une valeur initiale pHi à température ambiante, par addition d'une solution aqueuse d'acide sulfurique à 20 %, puis la température du milieu est portée à une température T, sous agitation, pendant une durée t.

On obtient une résine Rn (n = 5, 6, 7, 8 ) dont on mesure la viscosité Brookfield η en mPa.s.

Par analyse par chromatographie liquide haute performance (HPLC) on mesure la surface de l'aire des produits compris dans la résine de départ. Cette mesure est effectuée avant la réaction (Ai) et après la réaction (ai) dans des conditions d'élution, de détection et de concentration identiques.

On calcule le taux de condensation des composants de la résine au cours du procédé de vieillissement:

$$\frac{\Sigma Ai-\Sigma ai}{\Sigma Ai} \times 100$$

| Résine | η | Paramètres de la réaction | | | % de condensation |
|---|---|---|---|---|---|
| | | pHi | t | T | |
| R5 | 288 | 7,3 | 7 h 30 | 95°N | 83 % |
| R6 | 272 | 6,5 | 7 h 30 | 95°C | 82 % |
| R7 | 368 | 6,0 | 5 h 30 | 95°C | 82 % |
| R8 | 752 | 5,5 | 2 h 30 | 95°C | 89 % |

**EXEMPLE 9:**

On introduit dans un ballon:

- 12,6 g (0,1 mole) de mélamine,
- 31,2 g (0,3 mole) de diméthoxyéthanal en solution dans 37,2 g d'eau.

A température ambiante, on ajuste le pH de la solution à 5,6 à l'aide d'acide sulfurique en solution aqueuse à 20 % et on la porte à 95°c pendant 3 h 30. On obtient une résine présentant une viscosité Brookfield de 230 mPa.s, avec un taux de matière active de 54 %.

**EXEMPLE 10 :**

On prépare une résine selon l'exemple 2 au départ de:

- 291,4 g (2,31 moles) de mélamine,
- 721,6 g (6,9 moles) de diméthoxyéthanal en solution aqueuse à 50%.

La résine est alors concentrée à 76,4 % de matière active par évaporation sous pression réduite.

A cette résine concentrée, on ajoute 1 606 g de méthanol, puis le pH est ajusté à 4 par addition d'acide sulfurique en solution aqueuse à 50 %. On porte le milieu réactionnel à 50°C, puis après 30 mn sous agitation on le ramène à pH = 6 par addition d'une solution aqueuse de soude concentrée à 47 %.

Le méthanol en excès est évaporé sous pression réduite et l'on obtient 1 435 g d'une suspension blanche que l'on dilue par addition de 197,9 g d'eau distillée.

Après filtration sur verre fritté, on récupère 1 170 g de résine éthérifiée présentant une viscosité Brookfield d'environ 140 mPa.s.

**Revendications**

1. Résine aminoplaste à base d'un ou plusieurs dérivés aminés et d'un ou plusieurs aldéhydes caractérisée par le fait que le dérivé aminé est la mélamine, le glycolurile ou leur mélange en proportions variables et que l'aldéhyde est un produit de formule (I)

$$R\text{-}CHO \qquad (I)$$

dans laquelle R représente un groupement dialcoxyméthyle, dioxolan-1,3 yl-2 éventuellement substitué sur les sommets 4 et/ou 5 par un ou plusieurs groupements alcoyle ou un groupement dioxan-1,3 yl-2 éventuellement substitué sur les sommets 4, 5 et/ou 6 par un ou plusieurs groupements alcoyle, en mélange éventuellement avec du glyoxal.

2. Résine selon la revendication 1 caractérisée en ce que le produit de formule (I) est le diméthoxyacétaldéhyde, le diéthoxyacétaldéhyde, le dibutoxyacétaldéhyde, le formyl-2 dioxolane-1,3 ou le diméthyl-5,5 formyl-2 dioxane-1,3 en mélange éventuellement avec du glyoxal.

3. Résine selon l'une quelconque des revendications 1 et 2 caractérisée par le fait que le dérivé aminé est soit la mélamine, soit le glycolurile, et que l'aldéhyde est le diméthoxyacétaldéhyde, le diéthoxyacétaldéhyde, le dibutoxyacétaldéhyde en mélange éventuellement avec du glyoxal.

4. Résine selon l'une quelconque des revendications 1 à 3 de formule (II) :

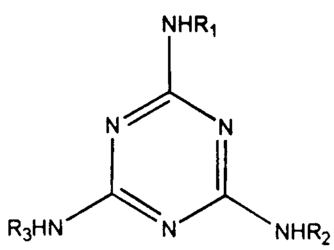

(II

dans laquelle $R_1$ représente un radical de formule (III)

$$-CH(OH)\text{-}CH(OR')_2 \qquad (III)$$

où R' représente un radical méthyle ou butyle, $R_2$ et $R_3$ identiques ou différents représentent un atome

d'hydrogène ou un radical $R_1$.

5. Résine selon l'une quelconque des revendications 1 à 4 caractérisée par le fait que c'est la (diméthoxy-2',2' hydroxy-1' éthylamino)-2 diamino-4,6 s-triazine,

6. Résine selon l'une quelconque des revendications 1 à 4 caractérisée par le fait que c'est la (dibutoxy-2',2' hydroxy-1' éthylamino)-2 diamino-4,6 s-triazine,

7. Résine selon l'une quelconque des revendications 1 à 4 caractérisée par le fait que c'est la bis(diméthoxy-2',2' hydroxy-1' éthylamino)-2,4 amino-6 s-triazine,

8. Résine selon l'une quelconque des revendications 1 à 4 caractérisée par le fait que c'est la bis(dibutoxy-2',2' hydroxy-1' éthylamino)-2,4 amino-6 s-triazine,

9. Résine selon l'une quelconque des revendications 1 à 4 caractérisée par le fait que c'est la tris(diméthoxy-2',2' hydroxy-1' éthylamino)-2,4,6 s-triazine,

10. Résine selon l'une quelconque des revendications 1 à 4 caractérisée par le fait que c'est la tris(dibutoxy-2',2' hydroxy-1' éthylamino)-2,4,6 s-triazine,

11. Procédé de préparation d'une résine selon l'une quelconque des revendications 1 à 4 caractérisé en ce que l'on fait réagir, en milieu aqueux, à un pH supérieur à 6, la quantité molaire d'un aldéhyde de formule (I) en mélange éventuellement avec du glyoxal, avec soit de la mélamine, soit du glycolurile, soit un mélange de glycolurile et de mélamine pour obtenir le degré de substitution désiré, puis que l'on isole la résine obtenue par des procédés connus en soi.

12. Procédé de préparation selon la revendication 11, caractérisé par le fait qu'il est effectué à une température comprise entre 30 et 120°C.

13. Procédé de préparation selon l'une quelconque des revendications 11 et 12, caractérisé par le fait qu'il est effectué en présence d'un catalyseur alcalin.

14. Procédé de préparation selon la revendication 13, caractérisé par le fait que le catalyseur alcalin est l'hydroxyde de sodium.

15. Résine aminoplaste caractérisée en ce qu'elle est issue du vieillissement d'une résine selon l'une quelconque des revendications 1 à 10.

16. Résine aminoplaste selon la revendication 15 caractérisée en ce que l'étape de vieillissement consiste à ajuster le pH de la solution de résine de départ à une valeur acide ou neutre et à chauffer cette solution.

17. Procédé de vieillissement d'une résine aminoplaste selon l'une quelconque des revendications 1 à 10, caractérisé en ce que l'on ajuste le pH de la solution de résine de départ à une valeur comprise entre 3 et 8 et que l'on porte la solution à une température supérieure à 30°C pendant 1 H à 10 H.

18. Résine aminoplaste caractérisée en ce qu'elle est obtenue par application du procédé selon la revendication 17 à une solution de mélamine et/ou glycolurile et de monoacétal du glyoxal et éventuellement de glyoxal.

19. Résine aminoplaste à base d'oligomères des produits selon l'une quelconque des revendications 1 à 10.

20. Résine selon la formule (IV)

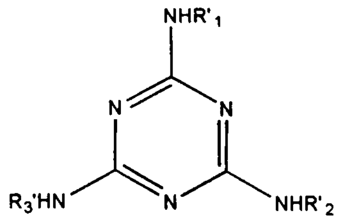

(IV)

dans laquelle R'$_1$, R'$_2$, R'$_3$, identiques ou différents représentent

- soit un atome d'hydrogène,
- soit un radical de formule (V)

$$-CH(OH)-R \quad (V)$$

où R a la même signification que dans la formule (I)
- soit un radical de formule (VI)

$$-CH(OR'')-R \quad (VI)$$

R ayant la même signification que dans la formule (I), et R'' désignant un radical alcoyle en $C_1$-$C_4$, l'un au moins de R'$_1$, R'$_2$, R'$_3$ étant différent de l'atome d'hydrogène.

**21.** Procédé de préparation de résines aminoplastes selon la revendication 20, caractérisé en ce que l'on traite une résine selon l'une des revendications 1 à 10 par un alcool en milieu acide ou neutre.

**22.** Utilisation d'une résine telle que définie à l'une quelconque des revendications 1 à 10, 15, 16, 18, 19, 20 pour réticuler la cellulose.

## Claims

**1.** Aminoplastic resin based on one or more amino derivatives and one or more aldehydes, characterized in that the amino derivative is melamine, glycoluril or their mixture in variable proportions and that the aldehyde is a product of formula (I)

$$R-CHO \quad (I)$$

in which R represents a dialkoxymethyl group, 1,3-dioxolan 2-yl group optionally substituted on the vertex 4 and/or 5 by one or more alkyl groups or a 1,3-dioxan 2-yl group optionally substituted on the vertices 4, 5 and/or 6 by one or more alkyl groups, optionally mixed with glyoxal.

**2.** Resin according to claim 1, characterized in that the product of formula (I) is dimethoxyacetaldehyde, diethoxyacetaldehyde, dibutoxyacetaldehyde, 2-formyl 1,3-dioxolane or 5,5-dimethyl 2-formyl 1,3-dioxane optionally mixed with glyoxal.

**3.** Resin according to any one of claims 1 and 2, characterized in that the amino derivative is either melamine, or glycoluril, and that the aldehyde is dimethoxyacetaldehyde, diethoxyacetaldehyde, dibutoxyacetaldehyde optionally mixed with glyoxal.

**4.** Resin according to any one of claims 1 to 3 of formula (II)

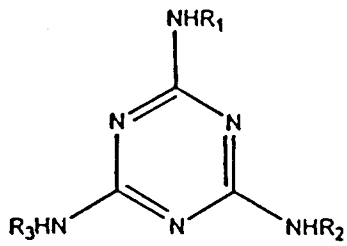

(II)

in which $R_1$ represents a radical of formula (III)

$$-CH(OH)-CH(OR')_2 \quad \text{(III)}$$

where R' represents a methyl or butyl radical, $R_2$ and $R_3$ identical or different represent a hydrogen atom or an $R_1$ radical.

**5.** Resin according to any one of claims 1 to 4, characterized in that it is 2-(2',2'-dimethoxy 1'-hydroxy ethylamino) 4,6-diamino s-triazine.

**6.** Resin according to any one of claims 1 to 4, characterized in that it is 2-(2',2'-dibutoxy 1'-hydroxy ethylamino) 4,6-diamino s-triazine.

**7.** Resin according to any one of claims 1 to 4, characterized in that it is 2,4-bis(2',2'-dimethoxy 1'-hydroxy ethylamino) 6-amino s-triazine.

**8.** Resin according to any one of claims 1 to 4, characterized in that it is 2,4-bis(2',2'-dibutoxy 1'-hydroxy ethylamino) 6-amino s-triazine.

**9.** Resin according to any one of claims 1 to 4, characterized in that it is 2,4,6-tris(2',2'-dimethoxy 1'-hydroxy ethylamino) s-triazine.

**10.** Resin according to any one of claims 1 to 4, characterized in that it is 2,4,6-tris(2',2'-dibutoxy 1'-hydroxy ethylamino) s-triazine.

**11.** Preparation process for a resin according to any one of claims 1 to 4, characterized in that a molar quantity of an aldehyde of formula (I), optionally mixed with glyoxal, is reacted, in an aqueous medium, at a pH of greater than 6, with either melamine, or glycoluril or a mixture of glycoluril and melamine in order to obtain the desired degree of substitution, then in that the resin obtained is isolated by processes known per se.

**12.** Preparation process according to claim 11, characterized in that it is carried out at a temperature comprised between 30 and 120°C.

**13.** Preparation process according to any one of claims 11 and 12, characterized in that it is carried out in the presence of an alkaline catalyst.

**14.** Preparation process according to claim 13, characterized in that the alkaline catalyst is sodium hydroxide.

**15.** Aminoplastic resin characterized in that it originates from the ageing of a resin according to any one of claims 1 to 10.

**16.** Aminoplastic resin according to claim 15, characterized in that the ageing stage consists of adjusting the pH of the starting resin solution to an acid or neutral value and of heating this solution.

**17.** Ageing process for an aminoplastic resin according to anyone of claims 1 to 10, characterized in that the pH of the starting resin solution is adjusted to a value comprised between 3 and 8 and that the solution is taken to a temperature greater than 30°C for 1 to 10 hours.

**18.** Aminoplastic resin characterized in that it is obtained by applying the process according to claim 17 to a solution of melamine and/or glycoluril and glyoxal monoacetal and optionally glyoxal.

**19.** Aminoplastic resin based on the oligomers of the products according to any one of claims 1 to 10.

**20.** Resin according to formula (IV)

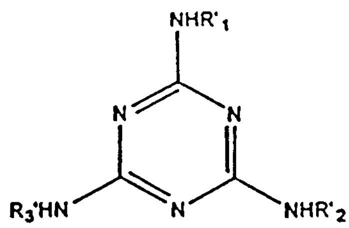

(IV)

in which $R'_1$, $R'_2$, $R'_3$, identical or different, represent

- either a hydrogen atom,
- or a radical of formula (V)

$$-CH(OH)-R \quad (V)$$

where R has the same meaning as in formula (I)
- or a radical of formula (VI)

$$-CH(OR'')-R \quad (VI)$$

R having the same meaning as in formula (I), and R'' designating a $C_1$-$C_4$ alkyl radical, at least one of $R'_1$, $R'_2$, $R'_3$ being different from the hydrogen atom.

**21.** Preparation process for aminoplastic resins according to claim 20, characterized in that a resin according to one of claims 1 to 10 is treated with an alcohol in an acid or neutral medium.

**22.** Use of a resin as defined in any one of claims 1 to 10, 15, 16, 18, 19, 20 for crosslinking cellulose.

## Patentansprüche

**1.** Aminoplastharz auf der Basis eines oder mehrerer Aminoderivate und eines oder mehrerer Aldehyde, dadurch gekennzeichnet, daß das Aminoderivat Melamin, Glycoluril oder deren Mischung in variablen Verhältnissen ist und der Aldehyd ein Produkt der Formel I

$$R-CHO \quad (I)$$

ist, in welcher R eine Dialkoxymethyl- oder 1,3-Dioxolan-2-yl-Gruppe, gegebenenfalls an den Positionen 4 und/oder 5 durch eine oder mehrere Alkylgruppen substituiert, oder eine 1,3-Dioxan-2-yl-Gruppe, gegebenenfalls an den Positionen 4, 5 und/oder 6 durch eine oder mehrere Alkylgruppen substituiert, ist, gegebenenfalls in Mischung mit Glyoxal.

**2.** Harz nach Anspruch 1, dadurch gekennzeichnet, daß das Produkt der Formel (I) Dimethoxyacetaldehyd, Diethoxyacetaldehyd, Dibutoxyacetaldehyd, 2-Formyl-1,3-dioxolan oder 5,5-Dimethyl-2-formyl-1,3-dioxan ist, gegebenenfalls in Mischung mit Glyoxal.

**3.** Harz nach einem der Ansprüche 1 und 2, dadurch gekennzeichnet, daß das Aminoderivat entweder Melamin oder Glycoluril ist, und der Aldehyd Dimethoxyacetaldehyd, Diethoxyacetaldehyd oder Dibutoxyacetaldehyd ist, gegebenenfalls in Mischung mit Glyoxal.

**4.** Harz nach einem der Ansprüche 1 bis 3 der Formel (II):

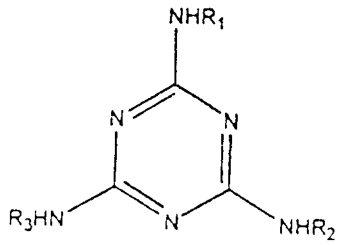

(II

in welcher $R_1$ einen Rest der Formel (III) bedeutet

$$-CH(OH)-CH(OR')_2 \quad (III),$$

worin R' einen Methyl- oder Butylrest bedeutet, $R_2$ und $R_3$, die identisch oder verschieden sind, ein Wasserstoffatom oder einen Rest $R_1$ bedeuten.

**5.** Harz nach einem der Ansprüche 1 bis 4, dadurch gekennzeichnet, daß es 2-(2'2'-Dimethoxy-1'-hydroxyethylamino)-4,6-diamino-s-triazin ist.

**6.** Harz nach einem der Ansprüche 1 bis 4, dadurch gekennzeichnet, daß es 2-(2'2'-Dibutoxy-1'-hydroxyethylamino)-4,6-diamino-s-triazin ist.

**7.** Harz nach einem der Ansprüche 1 bis 4, dadurch gekennzeichnet, daß es 2,4-bis(2',2'-Dimethoxy-1'-hydroxyethylamino)-6-amino-s-triazin ist.

**8.** Harz nach einem der Ansprüche 1 bis 4, dadurch gekennzeichnet, daß es 2,4-bis(2'2'-Dibutoxy-1'-hydroxyethylamino)-6-amino-s-triazin ist.

**9.** Harz nach einem der Ansprüche 1 bis 4, dadurch gekennzeichnet, daß es 2,4,6-tris(2',2'-Dimethoxy-1'-hydroxyethylamino)-s-triazin ist.

**10.** Harz nach einem der Ansprüche 1 bis 4, dadurch gekennzeichnet, daß es 2,4,6-tris(2',2'-Dibutoxy-1'-hydroxyethylamino)-s-triazin ist.

**11.** Herstellungsverfahren für ein Harz nach einem der Ansprüche 1 bis 4, dadurch gekennzeichnet, daß man in wäßrigem Medium bei einem pH-Wert von größer als 6 die molare Menge eines Aldehyds der Formel (I), gegebenenfalls in Mischung mit Glyoxal, entweder mit Melamin, Glycoluril oder einer Mischung aus Glycoluril und Melamin umsetzt, um den gewünschten Substitutionsgrad zu erzielen, worauf man das erhaltene Harz nach einem an sich bekannten Verfahren isoliert.

**12.** Herstellungsverfahren nach Anspruch 11, dadurch gekennzeichnet, daß es bei einer Temperatur zwischen 30 und 120°C durchgeführt wird.

**13.** Herstellungsverfahren nach einem der Ansprüche 11 und 12, dadurch gekennzeichnet, daß es in Gegenwart eines alkalischen Katalysators durchgeführt wird.

**14.** Herstellungsverfahren nach Anspruch 13, dadurch gekennzeichnet, daß der alkalische Katalysator Natriumhydroxid ist.

**15.** Aminoplastharz, dadurch gekennzeichnet, daß es durch das Härten eines Harzes nach einem der Ansprüche 1 bis 10 entsteht.

**16.** Aminoplastharz nach Anspruch 15, dadurch gekennzeichnet, daß das Härten durch das Einstellen des pH-Wertes

der Ausgangsharzlösung auf einen sauren oder neutralen Wert und das Erhitzen dieser Lösung durchgeführt wird.

**17.** Verfahren zum Härten eines Aminoplastharzes nach einem der Ansprüche 1 bis 10, dadurch gekennzeichnet, daß man den pH-Wert der Ausgangsharzlösung auf einen Wert zwischen 3 und 8 einstellt und die Lösung während 1 bis 10 Stunden auf eine Temperatur von mehr als 30°C bringt.

**18.** Aminoplastharz, dadurch gekennzeichnet, daß es durch Anwenden des Verfahrens nach Anspruch 17 auf eine Lösung aus Melamin und/oder Glycoluril und Glyoxalmonoacetal und gegebenenfalls Glyoxal erhältlich ist.

**19.** Aminoplastharz auf der Basis von Oligomeren der Produkte nach einem der Ansprüche 1 bis 10.

**20.** Harz der Formel (IV)

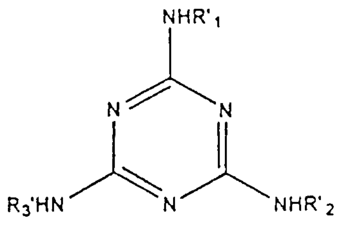

(IV),

in welcher $R'_1$, $R'_2$, $R'_3$, die gleich oder verschieden sind,

- entweder ein Wasserstoffatom,
- einen Rest der Formel (V)

$$-CH(OH)-R \qquad (V),$$

worin R die gleiche Bedeutung wie in Formel (I) hat,

- oder einen Rest der Formel (VI)

$$-CH(OR'')-R \qquad (VI),$$

worin R die gleiche Bedeutung wie in Formel (I) hat und R" einen $C_1$-$C_4$-Alkylrest bedeutet, bedeuten, wobei mindestens einer der Reste $R'_1$, $R'_2$ und $R'_3$ von einem Wasserstoffatom verschieden ist.

**21.** Verfahren zur Herstellung von Aminoplastharzen nach Anspruch 20, dadurch gekennzeichnet, daß man ein Harz nach einem der Ansprüche 1 bis 10 in saurem oder neutralem Medium mit einem Alkohol behandelt.

**22.** Verwendung eines Harzes, wie es in einem der Ansprüche 1 bis 10, 15, 16, 18, 19 und 20 definiert ist, um Cellulose zu vernetzen.